Europäisches Patentamt

European Patent Office

Office européen des brevets

(11) Veröffentlichungsnummer: **0 363 560**
**A2**

## EUROPÄISCHE PATENTANMELDUNG

(21) Anmeldenummer: 89107123.5

(22) Anmeldetag: 20.04.89

(51) Int. Cl.5: **B60R 21/26**

(30) Priorität: 13.10.88 DE 3834892

(43) Veröffentlichungstag der Anmeldung:
**18.04.90 Patentblatt 90/16**

(84) Benannte Vertragsstaaten:
**DE FR GB IT SE**

(71) Anmelder: **Bayern-Chemie Gesellschaft für flugchemische Antriebe mit beschränkter Haftung**

**D-8261 Aschau a. Inn(DE)**

(72) Erfinder: **Werner, Bernd**
**Josefstalerstrasse 4a**
**D-8162 Schliersee 2(DE)**
Erfinder: **Voggenreiter, Harald**
**Hauptstrasse 79**
**D-8014 Neubiberg(DE)**

(74) Vertreter: **Frick, Gerhard**
**Messerschmitt-Bölkow-Blohm GmbH**
**Patentabteilung Robert-Koch-Strasse**
**D-8012 Ottobrunn(DE)**

(54) **Gasgenerator.**

(57) Gasgenerator, eine Gaserzeugungskammer mit Zünder für einen Treibsatz und wenigstens eine Filterkammer enthaltend, durch die die erzeugten Druckgase von ihrem Austritt hindurch geleitet werden für den Einsatz bei einer Aufprallschutzeinrichtung zum Schutz von Insassen eines Fahrzeuges.

FIG. 1

EP 0 363 560 A2

# Gasgenerator

Die Erfindung betrifft einen Gasgenerator, eine Gaserzeugungskammer mit Zünder für einen Treibsatz und wenigstens eine Filterkammer enthaltend, durch die die erzeugten Druckgase vor ihrem Austritt hindurch geleitet werden für den Einsatz bei einer Aufprallschutzeinrichtung zum Schutz von Insassen eines Fahrzeug.

Ausgehend von der US Patentschrift 38 68 125 zum Stand der Technik, die einen Gaserzeuger beinhaltet, mit Umlenkblechen um radial Luft einströmen zu lassen und mit dem generierten Druckgas zu vermischen für ein axiales Füllen/Aufblasen eines Gassackes, liegt die Aufgabe der Erfindung darin, eine möglichst gleichmäßige Verteilung des anfallenden Gasstroms auf das/die Filter und dessen Beaufschlagung zu erreichen.

Gelöst wird diese Aufgabe gemäß den Merkmalen des Patentanspruchs 1.

Der wesentlichste Vorteil der Erfindung besteht in einer homogenen Beaufschlagung des vom Gasstrom zu passierenden Filters und damit einer effizienten Filterausnutzung.

Ein Ausführungsbeispiel der Erfindung ist in der beigefügten Zeichnung dargestellt und nachstehend beschrieben.

Es zeigen: .

Fig. 1 eine Zusammenstellung des Gasgenerators,

Fig. 2 eine Filterkammer des Gasgenerators,

Fig. 3 eine Abwandlung einer Filterkammer nach Fig. 2.

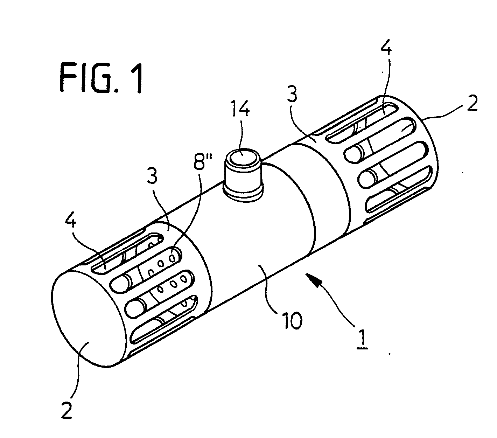

Wie Fig. 1 zeigt, hat der Gasgenerator eine im wesentlichen zylindrische Form und wird an seinen Stirnseiten oder an einer Linie längs seines Mantels mit dem Gehäuse für den aufblasbaren Gassack fest verbunden, so daß radial aus den Schlitzen der Filterkammern austretendes Gas diesen Sack aufbläst. Der Zünder 14, die Brennkammer 10 und die Filter 5 sind - weil an sich bekannter Art - nicht im Detail dargestellt und beschrieben.

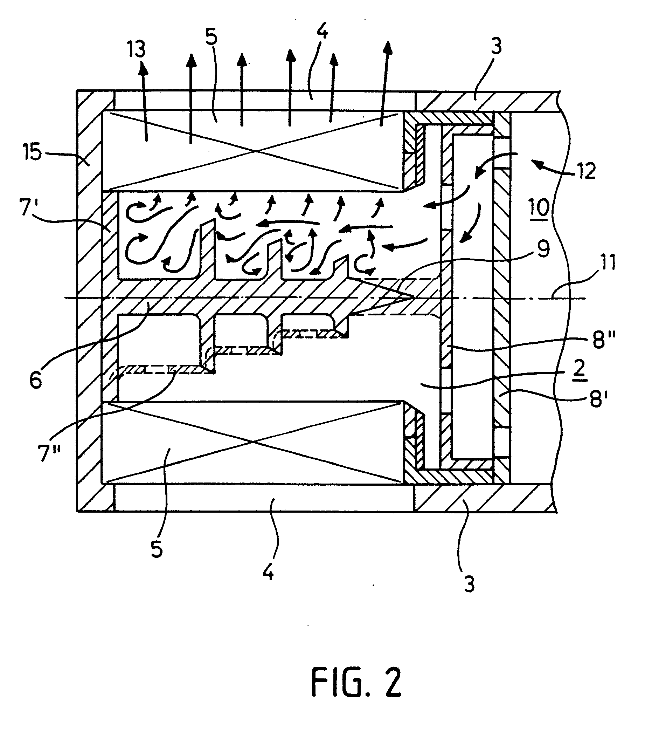

Fig. 2 zeigt eine Filterkammer des Gasgenerators im Querschnitt. Das Gehäuse 1 des Gasgenerators weist eine zylindrische Außenwand 3 auf, von dem in Fig. 2 der Teil sichtbar ist, der die Filterkammer umfaßt. Die Wand 3 hat die in Fig. 1 in Außenansicht sichtbaren geschlitzten Austrittsöffnungen 4, die das Gas aus der Filterkammer radial austreten lassen, um den Gassack aufzublasen. Die Ausströmrichtung ist durch Pfeile 13 gekennzeichnet. Die Einströmrichtung von der Brennkammer 10 her ist durch Pfeile 12 angegeben. Der ringförmige Filter 5 ist in Fig. 2 als Packung dargestellt. Im Innenraum des Filters im zentralen Bereich der Filterkammer mit der Längsachse 11, die auch die Längsachse des gesamten Gasgenerators darstellt, ist ein Verteiler 6 für die Gasströmung sichtbar, der tannenbaumartig ausgebildet ist. Dieser Verteiler 6 weist über seine Länge verteilt Platten 7' auf mit ventiltellerartigem Querschnitt. Die Platten weisen über die Längsachse ungleiche Abstände auf und ungleiche Querschnitte, wobei beide im umgekehrten Verhältnis zueinander stehen, d.h., je kleiner der Abstand zur nächsten Platte um so größer der Querschnitt einer ventiltellerartigen Platte. Der Fachmann kann jedoch die Abstände auch gleich oder anders wählen, ebenso die Verteilung der Querschnitte, wenn das gewählte Filter (Ausströmung) und/oder die Einströmung von der Düsenscheibe 8" bzw. der Durchsatz pro Zeiteinheit dies erfordert oder zweckmäßig erscheinen läßt. Ebenso kann die tannenbaumartige Form des Verteilers 6 geändert werden in eine mehr oder weniger zylindrische Ausbildung mit zylindrischer Achse 11 und nicht nur Kegelspitze 9 auf der Einströmseite. Die ventiltellerartigen Platten sind wie in Fig. 2 dargestellt abgestuft und die Stufen unterschiedlichen Durchmessers außen mit Drosselelementen 7" am Umfang der Platten versehen. Die Drosselelemente sind im einfachsten Falle als Lochbleche ausgebildet. Die Ausbildung der Lochbleche kann so getroffen werden, daß zwischen ihnen und der peripheren Wand 3 das Filter als Schüttung oder Paket in Folien, Membranen o.ä. kleindurchlöcherter Ausführung eingefüllt wird. Das Filtermaterial kann faser- oder drahtwollartig, grobporig schwammartig bzw. schaumkörperartig mit untereinander in Verbindung stehenden Poren o.ä. labyrintartigen Kanälen ausgebildet·sein oder alternativ hierzu als lose Packung von Kugeln, Tabletten, Peletts, stabförmigen o.a. regelmäßigen oder unregelmäßigen Stücken, die zueinander einen Zwischenraum unregelmäßiger Verteilung bilden und von der genannten Folie oder dgl. umhüllt werden. Der Verteiler 6 kann mit oder ohne den Drosselelementen 7" so ausgebildet sein, daß er mit wenigstens einer Platte 7' vorzugsweise zwei Platten einen Außendurchmesser aufweist, der in den Innendurchmesser des Filters 5 paßt. Ebenso muß die Länge der Achse 11 des Gasteilers 6 zwischen Stirnwand 15 des Gasgenerators und Düsenscheibe 8" - oder ggf. eine Düsenscheibe 8' - passen. Zwei Düsenscheiben 8' und 8" ergeben eine bessere Umlenkung und Strömungsdämpfungs- bzw. verzögerungseffekte, sodaß die Gasströmung gleichmäßiger durch das Filter hindurch strömt zum Umfang in der Wand 3 des Gasgenerators insbesondere zum radialen Austritt aus den schlitzförmigen Öffnungen 4.

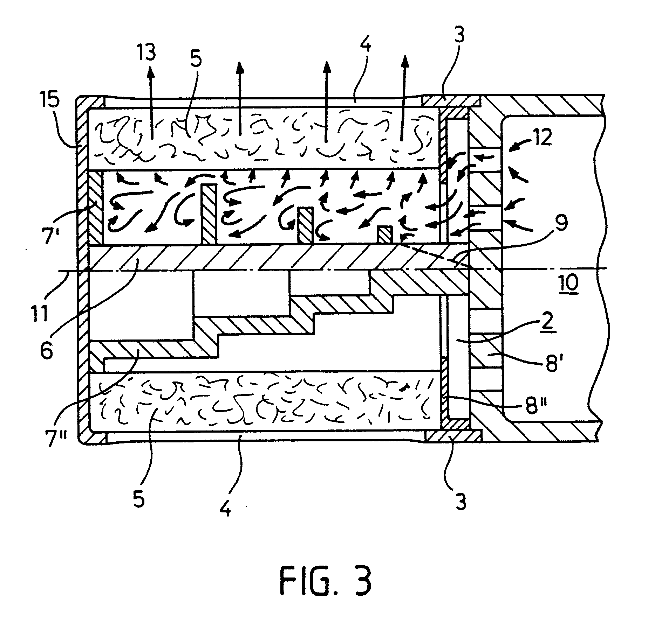

Eine Abwandlung zu Fig. 2 ist in Fig. 3 enthalten. Dort sind in der oberen Hälfte dieses Halbschnittes Scheiben 7' dargestellt aus anderem Material als die Achse 11 auf der sie befestigt sind. In der unteren Hälfte ist der Gasteiler 6 einstückig mit Sieb 7" ausgeführt.

Andere Abwandlungen dieses Ausführungsbeispiels können vom Fachmann zur Lösung der erfindungsgemäßen Aufgabe vorgenommen werden ohne hierdurch den Rahmen der Erfindung zu verlassen.

**Ansprüche**

1. Gasgenerator, eine Gaserzeugungskammer mit Zünder für einen Treibsatz und wenigstens eine Filterkammer enthaltend, durch die die erzeugten Druckgase von ihrem Austritt hindurch geleitet werden für den Einsatz bei einer Aufprallschutzeinrichtung zum Schutz von Insassen eines Fahrzeuges, **dadurch gekennzeichnet, daß**
- der/die Filter (5) ringförmig ausgebildet/zusammengesetzt und im peripheren Bereich einer mit Durchtritts- bzw. Austrittsöffungen (4) versehenen Außenwand (Mantel bzw. Gehausewand (3) angeordnet ist/sind;
- im Zentralbereich der Filterkammer (2) ein Strömungsumlenk- und -verteilkörper (6) angeordnet ist, der die Strömung des Druckgases (axial in Richtung der Hauptachse 11) dämpft/verzögert und gleichmäßig zum Umfang hin verteilt;
- in dem der Körper (6) so ausgebildet ist, daß er eine Anzahl von Strömmungsdrossel- und Umlenkelemente (7', 7") im wesentlichen quer zur Achsrichtung (11) der Einströmung des Gases aufweist, die in dieser Einströmrichtung (axial) beabstandet sind und im Raum (zentral) innerhalb des Filters (5) angeordnet zunehmende Durchmesser/Querschnitte in Richtung auf die der Einströmung abgekehrten Wand (15) aufweisen.

2. Gasgenerator nach Anspruch 1, **dadurch gekennzeichnet,** daß der Strömungsverteiler (6) tannenbaumartig ausgebildet ist.

3. Gasgenerator nach Anspruch 1 oder 2, **dadurch gekennzeichnet,** daß der Strömungsverteiler (6) über seine Länge aufgeteilt Platten aufweist mit ventiltellerartigen Querschnitt.

4. Gasgenerator nach einem der vorhergehenden Ansprüche, **dadurch gekennzeichnet,** daß die Platten (7') über die Länge des Verteilers (6) ungleiche Abstände und Querschnitte aufweisen, wobei beide im umgekehrten Verhältnis zueinander stehen.

5. Gasgenerator nach einem der vorhergehenden Ansprüche, **dadurch gekennzeichnet,** daß die Platten (7') Stufen bilden, an deren Umfang (7") Drosselelemente angeordnet sind.

6. Gasgenerator nach einem der vorhergehenden Ansprüche, **dadurch gekennzeichnet, daß**
auf der Einströmseite (8") des Gases eine Kegelspitze (9) axial angeordnet ist.

7. Gasgenerator nach einem der vorhergehenden Ansprüche, **dadurch gekennzeichnet,** daß der Verteiler (6) zentral in die Filterkammer (2) einsetzbar ist und zu deren Innenraum in Länge und/oder Durchmesser passend ausgebildet ist.

8. Gasgenerator nach einem der vorhergehenden Ansprüche, **dadurch gekennzeichnet,** daß an der einströmseitigen Stirnwand (8") der Filterkammer (2) der Verteilerausbildung angepaßte Einströmöffnungen (Düsen) angeordnet sind.

9. Gasgenerator nach einem der vorhergehenden Ansprüche, **dadurch gekennzeichnet,** daß der Filter (5) als Packung oder Schüttung ausgebildet ist, die angepaßt ist dem Zwischenraum zwischen peripherer Außenwand (3) und dem größten Durchmesser einer Platte (7') des Verteilers (6).

# FIG. 1

FIG. 2

FIG. 3

10 572